# EUROPEAN PATENT APPLICATION

(11) **EP 1 111 611 A2**
(43) Date of publication of application: **27.06.2001**
(21) Application number: 00311391.7
(22) Date of filing: 19.12.2000
(51) Int. Cl.: G11B 23/033

(54) **Liner bonding process and apparatus**

(30) Priority: 21.12.1999 JP 36243099
(71) Applicant: SONY CORPORATION, Tokyo (JP)
(72) Inventor: Kano, Kenichi, c/o Sony Corporation, Tokyo (JP)
(74) Representative: Boden, Keith McMurray

(57) **Abstract**

A liner bonding apparatus for bonding liners to half shells of a cartridge for housing a recording disc or the like, including a conveyor for conveying half shells, a fabric transfer mechanism for supplying a liner fabric, and a punching mechanism for punching out liners from the fabric. The apparatus further includes a provisional bonding mechanism for temporarily bonding a punched-out liner to each half shell on the conveyor by dripping liquid, such as water or alcohol, onto the half shells, and a nonprovisional bonding mechanism for bonding the liners permanently to the half shells by applying heat and pressure thereto.

## Description

The present invention relates to a liner bonding process and apparatus for bonding a liner to a casing member, such as a half shell forming a case of a cartridge encasing a disc-shaped recording medium.

In a disc cartridge enclosing a rotatable magnetic disc such as a flexible magnetic disc, there is provided therein one or more liners for protecting the disc against dust. A liner is formed by punching from nonwoven fabric, to have a circular shape slightly greater than the disc, and bonded to the inner side of a half shell by heating a layer of thermo-sensitive adhesive located between the nonwoven fabric and the half shell.

A liner bonding process of earlier technique includes a provisional bonding step for bonding a liner temporarily to a half shell to prevent the liner from sliding out of position during movement to a position for permanent bonding. The provisional bonding step is achieved by heating, melting and solidifying at a plurality of positions of a liner placed in the inner side of a half shell with a heating unit build in a punching die for punching liners from a liner fabric. The aim of the build-in arrangement of the heating unit for provisional bonding in the punching die is to perform the punching operation and the provisional bonding operation continuously.

However, this bonding system requires a heat insulating structure to prevent adverse influence on the punching die by heat produced by the heating unit for provisional bonding and transmitted by conduction or radiation. Such a heat insulating structure is difficult to build in a limited space within the punching die, and disadvantageous to cost. Moreover, the heat of the heating unit tends to cause thermal deformation of upper and lower cutting edges of the punching die, so that failure of zero-clearance therebetween could render the punching mechanism unable to perform the punching operation properly or damage the cutting edges. The heat of the heating unit could further deform a cartridge half shell and thereby affect the sliding motion of a shutter adversely.

It is therefore an aim of the present invention to provide a liner bonding process and apparatus devised to provisionally bond a liner to another member by the aid of properties of a liquid.

Another aim is to provide a liner bonding process and apparatus achieving a provisional liner bonding step without the need for heating and pressing.

According to the present invention, a liner bonding process comprises:
a provisional bonding step of temporarily bonding a shaped liner to an inner side of a cartridge half shell by supplying liquid onto the inner side of the cartridge half shell; and
a nonprovisional bonding step of nontemporarily bonding the liner which is bonded temporarily to the inner side of the cartridge half shell by the provisional bonding step, to the inner side of the cartridge half shell.

Preferably, the provisional bonding step is performed by dripping the liquid onto the inner side of the cartridge half shell and then placing the liner.

A liner bonding apparatus (or system) according to the present invention comprises:
a provisional bonding mechanism (or subsystem) including at least a liquid supplying device arranged to temporarily bond a shaped liner to an inner side of a cartridge half shell by supplying liquid onto the inner side of the cartridge half shell; and
a nonprovisional bonding mechanism (or subsystem) for nontemporarily bonding the liner which is already bonded temporarily to the inner side of the cartridge half shell by the provisional bonding step, to the inner side of the cartridge half shell.

The liner bonding apparatus may further comprise a liner fabric transfer mechanism to transfer a liner fabric, and a liner punching mechanism to forming the shaped liner by punching the liner from the liner fabric with a punching die. The liquid supplying device may comprise one or more nozzles arranged to drip a predetermined amount of the liquid onto the inner side of the cartridge half shell.

Preferred embodiments of the present invention will now be described hereinbelow by way of example only with reference to the accompanying drawings, in which:
FIG. 1 is a perspective view showing a liner bonding apparatus according to one embodiment of the present invention.
FIG. 2 is a perspective view showing a conveying mechanism in the liner bonding apparatus of FIG. 1.
FIG. 3 is a sectional view showing a liner punching mechanism in the liner bonding apparatus of FIG. 1.
FIG. 4 is a sectional view of the liner punching mechanism of FIG. 3 for illustrating a punching operation.
FIG. 5A is a perspective view showing nozzles of a provisional bonding mechanism in the liner bonding apparatus of FIG. 1, for dripping liquid onto an upper half shell.
FIG. 5B is a perspective view showing nozzles of the provisional bonding mechanism in the liner bonding apparatus of FIG. 1, for dripping liquid onto a lower half shell.
FIG. 6A is a perspective view showing an operation of placing a liner on the liquid dripped on an upper half shell.
FIG. 6B is a perspective view showing an operation of placing a liner on the liquid dripped on a lower half shell.
FIG. 7 is a side view showing a nonprovisional bonding mechanism in the liner bonding apparatus of FIG. 1.
FIG. 8 is a perspective view showing a bonding head of the nonprovisional bonding mechanism of FIG. 7.
FIG. 9 is a flowchart showing a liner bonding process according the embodiment of the present invention.
FIG. 10 is an exploded perspective view showing a disc cartridge produced by the liner bonding apparatus of FIG. 1.
FIG. 11 is a sectional view showing a liner used in the liner bonding apparatus of FIG. 1.

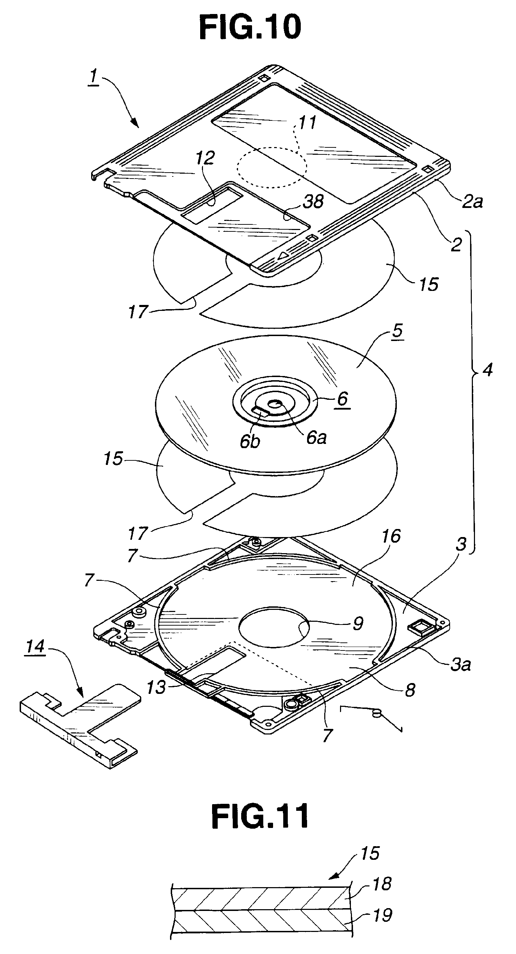

FIG. 10 shows a disc cartridge 1 produced by a liner bonding process according to one embodiment of the present invention. The disc cartridge 1 includes upper and lower half shells 2 and 3 joined together to form a case (or cartridge main body) 4 housing a magnetic disc 5 for recording information. The magnetic disc 5 in this example is a 3.5-inch-diameter circular disc having a flexible film-like substrate with magnetic recording layers on both sides. The recording capacity is several hundreds M bytes. The magnetic disc 5 has a center hole equipped with a center core 6 of magnetic material such as metal sheet. The center core 6 has a projection formed with an approximately square engaging hole 6a for receiving a spindle of a disc drive mechanism, and an approximately rectangular pin hole 8b for receiving a drive pin of the disc drive mechanism. The engaging hole 6a is located at the center, and the pin hole 8b is located at an off-center position away from the engaging hole 8a.

The upper and lower half shells 2 and 3 are formed by injection molding of synthetic resin such as acrylonitrile butyl styrene (ABS). Each half shell 2 or 3 has an upright brim 2a or 3a extending so as to describe a square, and an upright partition 7 extending so as to describe a circle inscribed in the square. In each half shell, the brim 2a or 3a and the partition 7 project upright from the inside surface. In the assembled state in which the upper and lower half shells 2 and 3 are correctly joined, the partitions 7 of the upper and lower half shells 2 and 3 abut against each other, and thereby form a disc receiving space 8 with the confronting inside surfaces of the upper and lower half shells 2 and 3. The disc receiving space 8 holds the magnetic disc 5 therein rotatably.

The lower half shell 3 forming the underside of the case 4 has a circular center opening 9 through which the center core 6 is bared to the outside. The upper half shell 2 has no opening in the center, and has a center plate 11 instead. The center plate 11 abuts against the tip of the spindle of the disc drive mechanism when the disc cartridge 1 is loaded in a recording and reproducing apparatus and the spindle is inserted through the engaging hole 6a. Each of the upper and lower half shells 2 and 3 is further formed with a recording and reproducing opening 12 or 13 extending in the same radial direction and exposing a part of the recoding area on one side of the magnetic disc 5. Each of the recording and reproducing openings 12 and 13 is a long rectangular opening extending from an inner end at a radial position near the center opening 9 to an outer end located at the middle of the front side of the case 4. The disc cartridge 1 is designed to be inserted from the front side into the recording and reproducing apparatus.

A shutter 14 for closing the recording and reproducing rectangular openings 12 and 13 is mounted on the case 4 so that the shutter 14 is slidable along the front side of the case 4. The shutter 14 normally close the rectangular openings 12 and 13 to prevent foreign objects such as dirt from entering the disc receiving space 8, and opens the rectangular openings 12 and 13 when the cartridge 1 is inserted in the recording and reproducing apparatus.

A liner (or lining) 15 for protecting and cleaning the magnetic disc 5 is disposed in a liner receiving portion 16 formed inside each of the upper and lower half shells 2 and 3 within the partition 7. The liner receiving portion 16 of each half shell 2 or 3 is defined by a flat inside surface. Each of the liners 15 is sized to cover one of the main surfaces of the magnetic disc 5. Each liner 15 is formed to have a ring-like shape by punching. Each liner 15 has a gap (or cutout) 17 corresponding to the rectangular recording and reproducing opening 12 or 13. As shown in FIG. 11, each liner 15 is a laminate including a liner sheet 18 of nonwoven fabric produced from fibers of cellulose such as rayon, and an adhesive layer 19 of heat sensitive adhesive formed on one side of the liner sheet 18, for bonding the liner 15 to the inside surface of one of the upper and lower half shells 2 and 3. The adhesive layer 19 is formed by coating one side of the liner sheet 18 with polymeric material having heat sensitive adhesive property, such as ethylene vinyl acetate or polyethylene terephthalate (PET). The liners 15 are attached, respectively, to the liner receiving portions 16 of the upper and lower half shells 2 and 3 by a liner bonding apparatus 20 according to one embodiment of the present invention.

The thus-constructed disc cartridge 1, when not in use, is in a closed state in which the first and second recording and reproducing openings 12 and 13 are closed by the shutter 14 to protect the disc receiving space 8 against dust. When the disc cartridge 1 is inserted into a recording and reproducing apparatus from the front side having the shutter 14, a shutter opening mechanism in the recording and reproducing apparatus moves the shutter 14 to open the recording and reproducing openings 12 and 13. Then, a disc drive mechanism in the recording and reproducing apparatus inserts its spindle into the engaging hole 6a of the magnetic disc 5 through the center opening 9 of the lower half shell 3, and inserts its drive pin into the pin receiving hole 6b. Thus, the magnetic disc 5 is driven to rotate on the spindle in the disc receiving space 8 of the cassette 1. On the other hand, a magnetic head of a recording and reproducing mechanism is set close to the magnetic disc 5 through the first or second recording and reproducing opening 12 or 13, and operated to perform a recording or reproducing operation of information signal.

In the process of producing the disc cartridge 1, the liners 15 are attached to the liner receiving portions 16 in the upper and lower half shells 2 and 3 by a liner bonding process with a liner bonding apparatus according to the embodiment of the present invention.

The liner bonding process of this embodiment includes at least a provisional bonding step of provisionally bonding a preliminarily shaped liner to the inner side of a cartridge half shell, and a nonprovisional bonding step of bonding the provisionally bonded liner to the half shell in a nonprovisional manner. In the provisional bonding step, a liquid discharged from a liquid discharging device is dripped by at least one nozzle onto the inner side of the cartridge half shell.

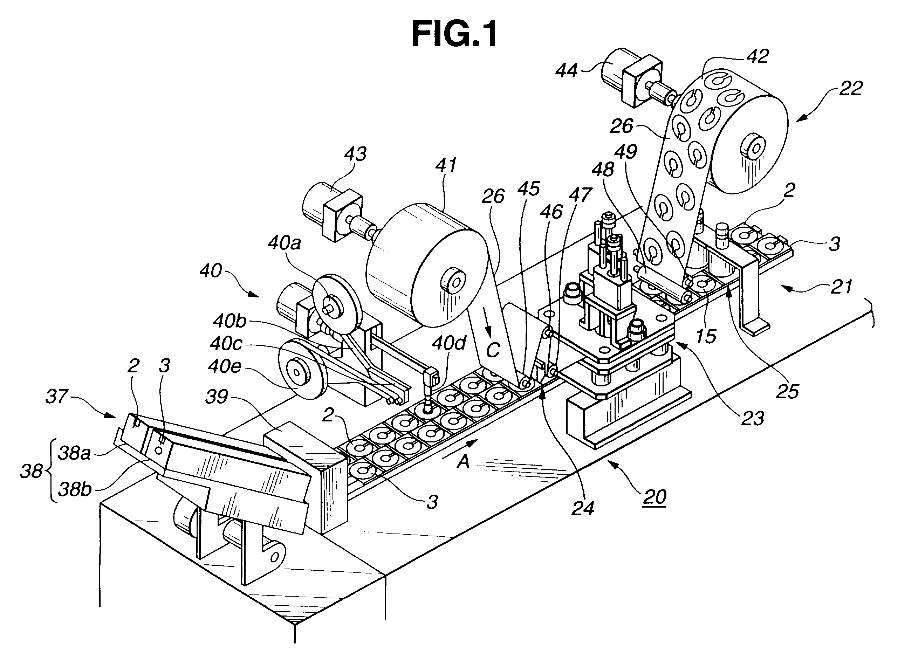

FIG. 1 shows the liner bonding apparatus or system 20 of the embodiment of the present invention. The liner bonding apparatus 20 includes a conveying mechanism or subsystem 21 for conveying upper and lower half shells 2 and 3, a fabric transfer mechanism or subsystem 22 for moving a liner fabric 26, a punching mechanism or subsystem 23 for producing liners 15 by punching from the fabric 26, a provisional bonding mechanism or subsystem 24 for provisionally bonding liners 15 to the liner receiving portions 16 of upper and lower half shells 2 and 3, and a nonprovisional bonding mechanism or subsystem 25 for bonding liners 15 to the liner receiving portions 16 of upper and lower half shells in a nonprovisional manner. By the liner transfer mechanism 22, the liner fabric 26 is moved so that the liner fabric 26 confronts upper and lower half shells 2 and 3 at a punching position, at which liners 15 are punched out from the liner fabric 26 by the punching mechanism 23. In this liner bonding apparatus 20, the liner fabric 26 runs so that the main surface of the liner fabric 26 faces upper and lower half shells 2 and 3 at the punching position, and the punching mechanism 23 is positioned above the punching position. This arrangement is advantageous for size reduction of the liner bonding apparatus as a whole. Moreover, the liner bonding apparatus 20 is arranged to perform an operation of punching out liners and an operation of placing punched-out liners in the liner receiving portions 16 of upper and lower half shells 2 and 3 continuously, so that the time required for attaching liners 15 is reduced.

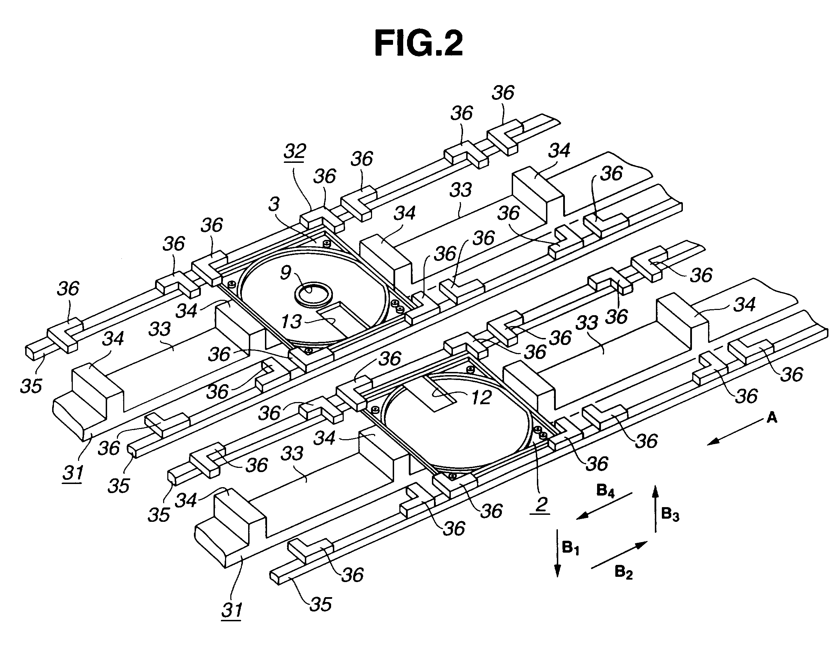

The shell conveying mechanism 21 for conveying upper and lower half shells 2 and 3, as shown in FIG. 2, includes first and second half shell conveying mechanisms each including at least a conveying member 31 for carrying upper or lower half shells 2 or 3 and a holding mechanism 32 for holding each half shell at a predetermined position. Upper and lower half shells 2 and 3 are arranged in pairs, and the conveying mechanism 21 conveys each pair of an upper half shell 2 and a lower half shell 3 in a conveying direction shown by an arrow A in FIG. 2 so that the upper and lower half shells 2 and 3 advance along a longitudinal center line of the shell conveying mechanism 21 on the opposite sides of the longitudinal center line.

The conveying member 31 for upper half shells and the conveying member 31 for lower half shells extend substantially in parallel to each other. Each conveying member 31 has a long support portion 33 having a width needed to support half shells 2 or 3, and positioning projections 34 for positioning half shells 2 or 3 on the support portion 33. The positioning projections 34 are regularly arranged so that two adjacent projections 34 are spaced at a distance approximately equal to the width of upper and lower half shells 2 and 3, and arranged to form a depression having a flat bottom. The support portion 33 is designed to support each of upper or lower half shells 2 or 3 so that the liner receiving portion 16 formed in the inner side of the half shell faces upwards and the main outer surface of the half shell faces downwards. The positioning projections 34 project from the support portion 33. The height of the positioning projections 34 is greater than the height of the upright brim 2a or 3a of upper or lower half shells 2 or 3. The thus-constructed conveying members 31 are moved synchronously in a cyclic manner in four directions in the order of arrows B1, B2, B3 and B4 shown in FIG. 2, by an unshown drive mechanism.

The holding mechanism 32 in each of the upper and lower half shell conveying mechanisms includes a pair of rails 35 extending substantially in parallel to the conveying member 31, and holding portions 36 formed on the rails 35. The conveying member 31 extends between the rails 35. The holding portions 36 are shaped like a letter L, and arranged to holds the four corners of each half shell. Each half shell is held by a set of two corner portions 36 on one of the rails 35 and two corner portions 36 of the other rail 35.

With the conveying members 31 as a moving side and the holding mechanism 21 as a fixed side, the conveying system 21 conveys upper and lower half shells 2 and 3 intermittently in the conveying direction A shown by the arrow A by moving the conveying members 31 in the directions B1, B2, B3 and B4 in sequence so as to describe a loop. First, the conveying members 31 descend in the downward direction B1 with respect to the rails 35, and then move in the direction B2. Next, the conveying members 31 ascend in the upward direction B3, and thereby support upper and lower half shells 2 and 3 held by the holding portions 36 on the upstream side. Then, the conveying members 31 move in the direction B4 identical to the conveying direction A, and descend again in the downward direction B1, so that the upper and lower half shells 2 and 3 are held by the holding portions on the downstream side. In this way, upper and lower half shells 2 and 3 are carried intermittently in the direction A.

A half shell supplying mechanism 37 is provided at the starting end of the conveying mechanism 21, and arranged to supply upper and lower half shells 2 and 3 to the conveying mechanism 21. The half shell supplying mechanism 37 includes a stock container 38 sloping down to the starting end of the conveying system 21. The stock container 38 includes an upper shell stock section 38a for storing a pile of upper half shells 2 stacked in the sloping direction and a lower shell stock section 38b for storing a pile of lower half shells 3 stacked in the sloping direction. Upper and lower half shells 2 and 3 are transferred one by one to the conveying mechanism 21 by a transfer mechanism 39. The transfer mechanism 39 has sucking devices for holding upper and lower half shells by suction. The transfer mechanism 39 holds an upper half shell at the lowermost position in the pile of upper shells and a lower half shell at the lowermost position in the pile of lower shells, with the sucking devices, and transfers the upper and lower half shells 2 and 3 to the conveying mechanism 21.

Each pair of upper and lower half shells 2 and 3 is transferred by the half shell supplying mechanism 37 to the conveying mechanism 21, and conveyed in the conveying direction A by the conveying mechanism 21. First, in the process of the conveyance, a center plate 11 is attached to the upper half shell 2 at the position to confront the center opening of the lower half shell 3, by a center plate attaching mechanism 40. The center plate attaching mechanism 40 has a supply reel 40a for supplying a tape of center plate material 40b together with separating paper, a cutting section 40 for cutting the center plate material 40b in a predetermined length, and a sucking head 40d for sucking a center plate 11 cut out from the center plate material 40b and attaching the center plate 11 to the inner side of the upper half 2. A takeup reel 40e takes up the separating paper.

The liner fabric transfer mechanism 22 of the liner bonding apparatus 20 is means for moving a liner material fabric 26 in confrontation with upper and lower half shells on the conveying mechanism 21. The liner fabric transfer mechanism 22 includes a supply reel 41 for storing the liner fabric 26, and a takeup reel 42 for winding the liner fabric 26 perforated by the punching operation of punching out liners 15. A first drive motor 43 drives the supply reel 41, and a second drive motor 44 drives the takeup reel 42. The supply reel 41 and takeup reel 42 are placed above the half shell conveying mechanism 21.

The liner fabric transfer mechanism 22 further includes first guide rollers 45, 46 and 47 located on one side of the punching position, and second guide rollers 48 and 49 located on the other side. The second guide rollers 48 and 49 serve as intermittent feed rollers (or nip rollers). These guide rollers are arranged to define a path for the liner fabric 26 and guide the liner fabric 26 along the path so that the main surface of the liner fabric 26 faces downward to the upwardly facing inside surfaces of upper and lower half shells 2 and 3 on the conveying mechanism 21. The first guide rollers 45, 46 and 47 define a zigzag path segment from the supply reel 41 to a straight path segment extending, substantially in parallel to the conveying direction, through the punching position. At the end of the straight path segment, the second guide rollers 48 and 49 bend the path toward the takeup reel 42. In cooperation with the first drive motor 43 for driving the supply reel 41, the second guide rollers 48 and 49 maintain proper fabric tension in the straight path segment so as to enable the punching operation.

The liner fabric 26 supplied from the supply reel 41 runs in the same direction as the conveying direction of upper and lower half shells 2 and 3, by the action of the first and second drive motors 43 and 44, and undergoes the punching operation by the punching mechanism 23. After the punching operation, the perforated liner fabric 26 is wound onto the takeup reel 42.

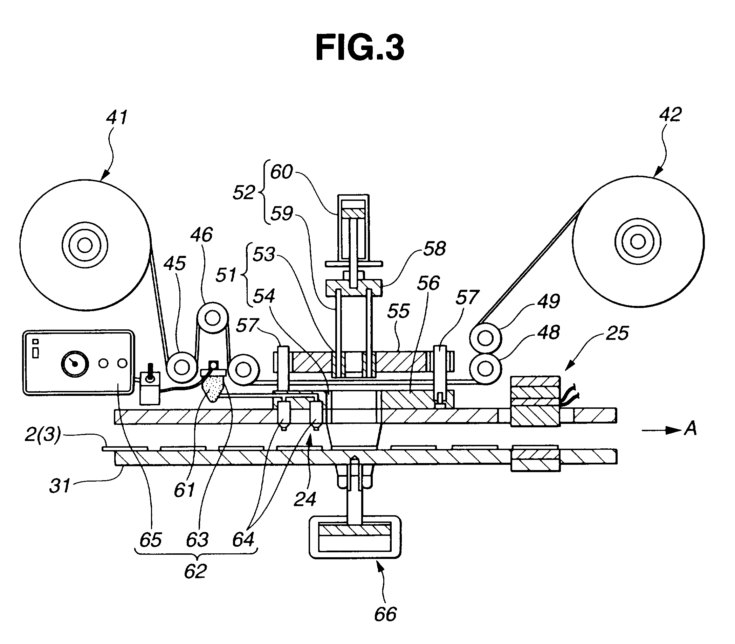

The punching mechanism 23 is disposed at the punching position on the downstream side of the center plate attaching mechanism 40. The punching mechanism 23 includes first and second punching units arranged to punch out liners 15 from the liner fabric 26 held face to face with the conveying system 21, and consecutively to place liners in upper and lower half shells 2 and 3. As shown in FIG. 3, each punching unit of the punching mechanism 23 includes a punching die 51 for punching out liners 15 from the liner fabric 26, and a liner holding mechanism 52 for placing punched-out liners 15 in the liner receiving portions 16 of upper or lower half shells 1 and 2.

The punching die 51 includes an upper die 53 and a lower die 54. The upper die 53 is shaped like a ring to have a diameter approximately equal to the outside diameter of liners 15, and formed, on the outer circumference, with a cutter portion for cutting off a liner 15 from the liner fabric 26.

The lower die 54 is located just below the upper die 53, and the liner fabric 26 is stretched, alongside the conveying mechanism 21, between the upper die 53 above and the lower die 54 below. The lower die 54 is shaped like a ring to have an inside diameter approximately equal to the outside diameter of the upper die 53. A liner 15 is cut out from the liner fabric 26 by fitting the upper die 53 into the lower die 54.

A pressure plate 55 is arranged to press down the liner fabric 26 around the upper die 53 at the time of the punching operation. The lower die 54 is surrounded by a base plate 56 for receiving the pressure of the pressure plate 55 and clamping the liner fabric 26 between the base plate 56 and the pressure plate 55. Guide posts 57 support the pressure plate 55 around the upper die 53 so that the pressure plate 55 can move toward and away from the lower die 54. When the upper die 53 is moved toward the lower die 54, the pressure plate 55 presses the liner fabric 26 onto the base plate 56. At the same time, the upper die 53 is forced into the lower die 54 until a liner 15 is cut off from the liner fabric 26.

The liner holding mechanism 52 is held by a holder 58 located above the pressure plate 55. The liner holding mechanism 52 includes a plurality of holding members (or rods) 59 for sucking, by vacuum, and holding a punched-out liner 15, and a drive unit 60 for moving the holding members 59 toward an upper or lower half shell 2 or 3 held on one of the conveying members 31 of the conveying mechanism 21.

The holding members 59 are arranged to move slidably through the ring-shaped upper die 53. Each holding member 59 has a sucking face for holding a liner 15 by suction.

The provisional bonding mechanism 24 is provided on the upstream side of the punching mechanism 23 with respect to the advancing direction of the liner fabric 26, and designed to provisionally bond a punched-out liner 15 to the liner receiving portion 16 of an upper or lower half shell 2 or 3. The provisional bonding mechanism 24 includes a liquid supplying mechanism 62 for supplying a proper amount of liquid 61 for provisional bonding, onto the liner receiving portion 16 of an upper or lower half shell 2 or 3. The liquid 61 for provisionally bonding a liner 15 to a half shell is water, alcohol, alcohol diluted with water or some other liquid.

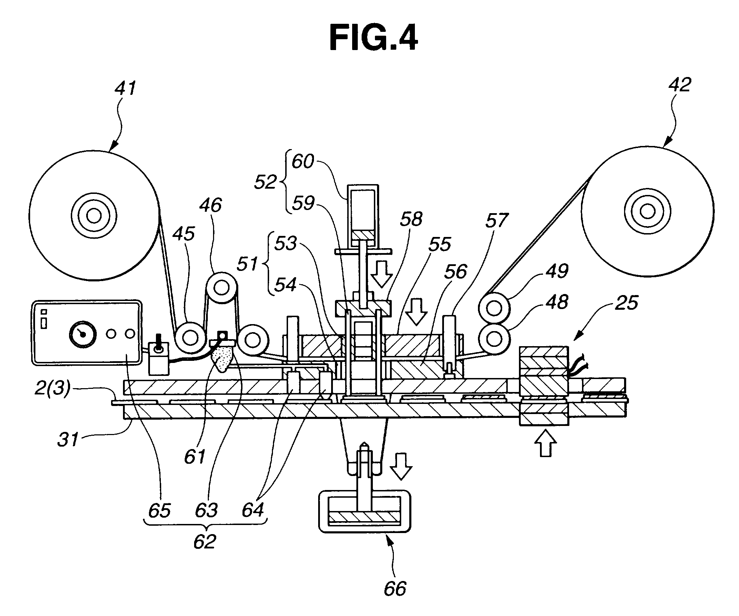

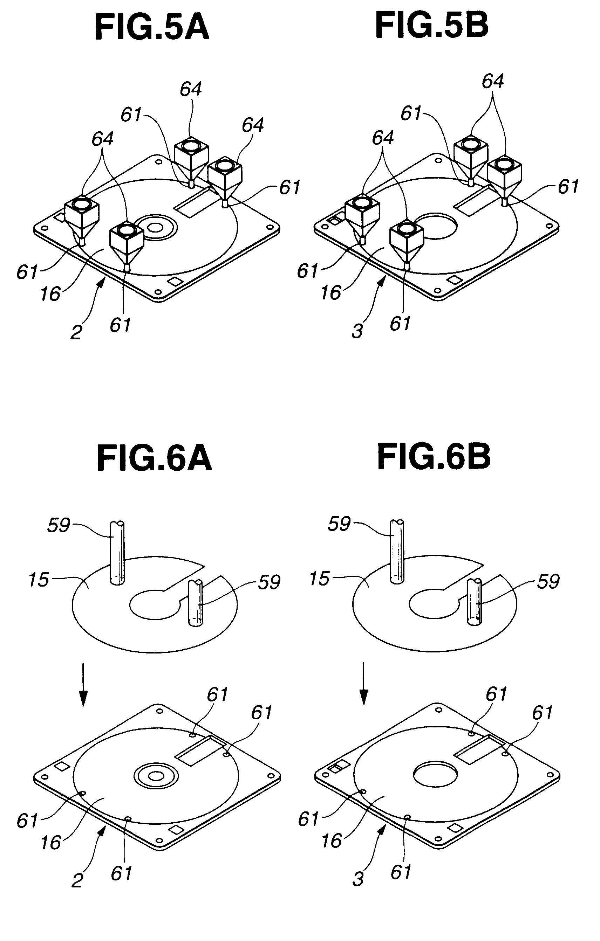

The liquid supplying mechanism 62 includes a discharge device 63 for discharging the liquid 61, and nozzles 64 for supplying the liquid 61 discharged from the device 63, to the liner receiving portion of upper and lower half shells 2 and 3. In this example, there are eight of the nozzles 64. Four of the nozzles 64 are arranged to supply the liquid 61 at four different positions in the liner receiving portion 16 of an upper half shell 2, and the remaining four are to supply the liquid 61 at fourth different positions in the liner receiving portion 16 of a lower half shell 3. A controller 65 controls the amount of the liquid discharged from the discharging device 63 and discharged from the nozzles 64. The nozzles 64 are attached to the base plate 56 of the lower die 54. When, from the state shown in FIG. 3, upper and lower half shells 2 and 3 supported on the conveying members 31 are moved upward, as shown in FIG. 4, a proper amount of the liquid 61 is dripped onto the liner receiving portion 16 of each of the upper and lower half shells 2 and 3 by the nozzles 64, as shown in FIGS. 5A and 5B. Then, the upper die 53 is moved downwards by the drive unit 66, as shown in FIG. 4 until a liner 15 is punched out from the liner fabric 26. Then, the punched-out liner 15 is held by the holding members 59 of the liner holding mechanism 52 by suction, and placed in the liner receiving portions 16 of the upper or lower half shells 2 and 3 in which four drops of the liquid 61 for each half shell are already supplied by the provisional boding mechanism 24. In this way, liners 15 are bonded temporarily to upper and lower half shells 2 and 3.

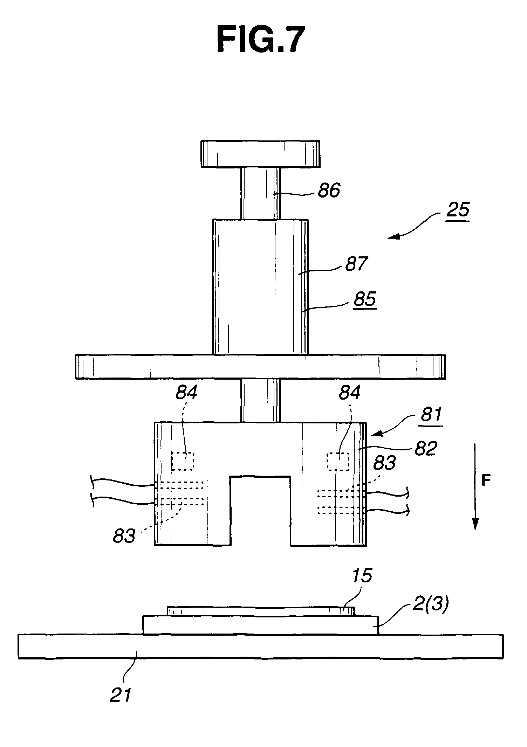

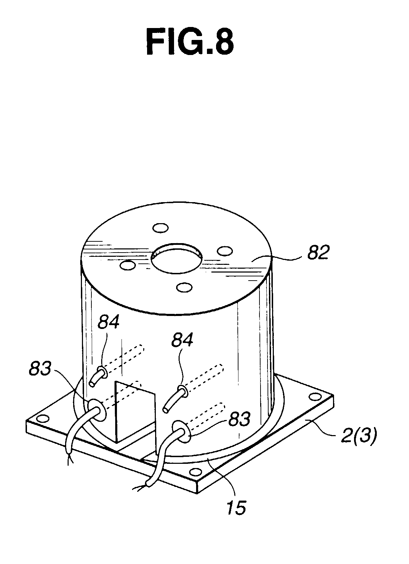

The nonprovisional bonding mechanism 25 is located on the downstream side of the punching mechanism 23. The nonprovisional bonding mechanism 25 includes first and second nonprovisional bonding units for bonding liners 15 temporarily bonded to upper and lower half shells 2 and 3, permanently to the liner receiving portions 16 of the upper and lower half shells 2 and 3. As shown in FIG. 7 and 8, each of the first and second bonding units of the nonprovisional bonding mechanism 25 includes a bonding head 81 and a drive unit 85 for moving the bonding head 81 toward and away from a provisionally bonded liner 15 in an upper or lower half shell 2 or 3.

The bonding head 81 includes a cylindrical main body 82 having a lower surface for pressing a liner 15 provisionally bonded in the liner receiving portion 16 of an upper or lower half shell 2 or 3. The diameter of this lower surface is slightly greater then the outside diameter of liners 15. In the main body 82, at least one heater 83 is embedded for heating the heat sensitive adhesive layer 19 of a liner 15. The heater 83 increases the temperature of the bonding head 81 into a temperature range from 120°C to 140°C, preferably a temperature range from 125°C to 135°C, for melting the heat sensitive adhesive 19. The main body 82 further includes a temperature sensor 84 embedded therein, for sensing the temperature of the main body 82.

The drive unit 85 includes a cylinder actuator for moving the bonding head 81 in a direction shown by an arrow F toward an upper or lower half shell 2 or 3. The cylinder actuator includes a piston 86 attached at one end to the bonding head 81, and a cylinder 87. The piston 86 is moved relative to the cylinder 87 in the direction F, and the bonding head 81 is put in contact with a liner 15.

When a liner 15 is transferred to the nonprovisional bonding position by the conveying mechanism 21, the drive unit 85 is driven to move the bonding head 81 in the direction F, and the bonding head 81 presses the provisionally bonded liner 15 to the liner receiving portion 16 of the upper or lower half shell 2 or 3. In this case, the bonding head 81 heated by the heater 83 presses the liner 15, and at the same time supplies heat to the adhesive layer 19 in the liner 15, so that the adhesive layer 19 is molten and the liner 15 is bonded to the liner receiving portion 16 in the non-temporary manner. Thereafter, the bonding head 81 is moved upwards away from the upper or lower half shell 2 or 3.

The thus-constructed liner bonding apparatus 20 is operated as follows:

Upper and lower half shells 2 and 3 are transferred one by one from the half shell supplying mechanism 37 to the starting end of the conveying mechanism 21, and arranged in pairs. Each pair is conveyed in the direction A intermittently so that one of the upper and lower half shells 2 and 3 is on the left side of a longitudinal center line extending in the conveying direction A, and the other is on the right side.

Then, a center plate 11 is attached to the upper half shell 2 held by the holding mechanism 32, by the center plate attaching mechanism 40.

On the other hand, the liner fabric transfer mechanism 22 causes a liner fabric 26 to advance in a direction shown by an arrow C in FIG. 1, with the first and second drive motors 43 and 44, Therefore, the liner fabric 26 advances in the half shell conveying direction A with the main surface of the liner fabric 26 being held substantially in parallel to the longitudinal line of the conveying mechanism 21. At the punching position, a liner 15 is punched out from the liner fabric 26. The thusperforated liner fabric 26 is guided by the second guide rolls 48 and 49 and wound on the takeup reel 42. The second guide rolls 48 and 40 cooperate with the first drive motor 43 for driving the supply reel 41 to provide a predetermined tension to the liner fabric 26.

When the upper half shell 2 with the center plate 11 and the lower half shell 3 are then moved in the conveying direction A, the conveying members 31 and the upper and lower half shells 2 and 3 supported by the conveying members 31 are moved upwards, as shown in FIG. 3 and 4, and the nozzles 64 are operated to drip a predetermined amount of the liquid for provisional bonding, to the liner receiving portion 16 of each of the upper and lower half shells 2 and 3.

Then, the upper die 53 is moved downwards toward the lower die 54, and thereby the liner fabric 26 is pressed against the base plate 56 by the pressure plate 55 surrounding the punching position, and clamped between the pressure plate 55 and the base plate 56 in the tense state. At the same time, the upper die 53 cuts out a liner 15 from the liner fabric 26 by forcing into the lower die 54.

The rod-like holding members 59 of the holding mechanism 52 move toward the upper or lower half shell 2 or 3 simultaneously with the movement of the upper die 53, and suck the liner with a suction pump (not shown) when the liner 15 is punched out. The holding members 59 hold the liner 15 until the liner 15 is placed in the liner receiving portion 16 of the upper or lower half shell 2 or 3.

The holding members 59 holding the liner 15 move toward the upper or lower half shell 2 or 3 supported on a support base 78, and place the liner 15 in the liner receiving portion 16 of the half shell 2 or 3. Therefore, the liner 15 is bonded temporarily to the liner receiving portion 16 of the half shell 2 or 3 by the surface tension, capillarity and viscosity of the liquid 61 supplied by the provisional bonding mechanism 23.

After the provisional bonding operation, the liner 15 is released by stopping the suction pump, and the holding members 59 are moved upwards away from the half shell 2 or 3. Moreover, the upper die 53 is moved away from the lower die 54, so that the liner fabric 26 becomes movable again between the upper and lower dies 53 and 54. The liner fabric 26 perforated by the punching operation is taken up by the takeup roll 42.

Each of the upper and lower half shells 2 and 3 is conveyed to the position for the nonprovisional bonding. At the nonprovisional bonding position, the bonding head 81 is moved toward the half shell 2 or 3.

Then, the bonding head 81 presses the liner 15 provisionally bonded to the half shell 2 or 3. In this case, the bonding head 81 is heated by the heater 83. Therefore, the bonding head 81 presses the liner 15 and simultaneously supplies heat to the liner 15 until the heat sensitive adhesive layer 19 of the liner 15 is fused and the liner 15 is bonded in the non-temporary manner to the liner receiving portion 16 of the half shell 2 or 3. Thereafter, the bonding head 81 is moved away from the liner 15 permanently bonded to the half shell 2 or 3.

The upper and lower half shells 2 and 3 to which the liners 15 are bonded in this way are brought to a next step at which a magnetic disc 5 is placed in one of the upper and lower half shells 2 and 3, and the upper and lower half shells 2 and 3 are joined together to form the case 4. Then, a shutter 14 is attached from the front side of the case 4, and the cartridge 1 is completed.

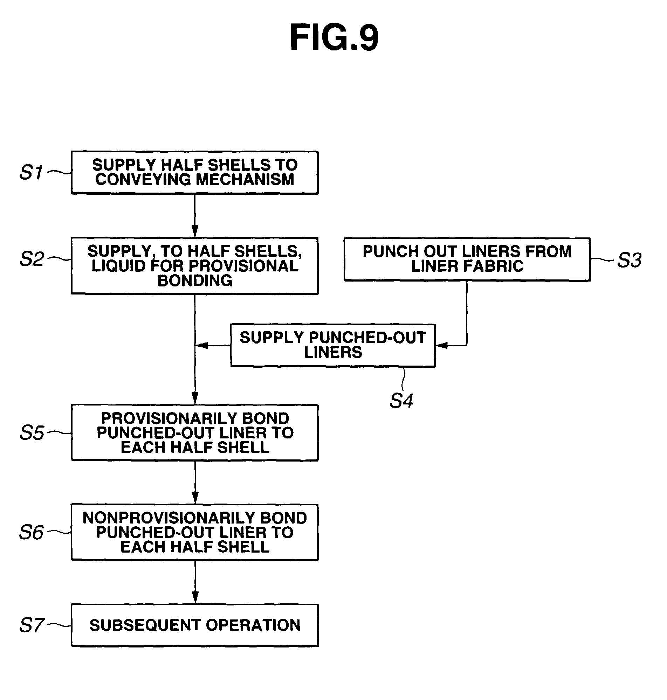

FIG. 9 is a flowchart for schematically showing the liner boding process according to the embodiment of the present invention. The process shown in FIG. 1 includes at least the following steps. A first step S1 is a half shell supplying step of supplying upper and lower half shells 2 and 3 to the conveying mechanism 21. A second step S2 is a liquid supplying step of supplying the liquid 61 to the upper and lower half shells 2 and 3. A step S3 is a step of punching out liners 15 from a liner fabric 26. A step S4 is for supplying punched-out liners. A step S5 is a step of provisionally bonding a punched-out liner to each half shell by placing the liner on the liquid supplied by the step S2. The provisional bonding step S5 in the embodiment is performed without heating the liner. A step S6 is a step of bonding the liner 15 to each half shell 2 or 3 in the nonprovisional or permanent manner. At a next step S7, the upper and lower half shells 2 and 3 are joined together to form a case 4 with a magnetic disc 5 encased between the upper and lower half shells 2 and 3.

In the illustrated embodiment of the present invention, liners are provisionally bonded to half shells by the use of properties of liquid such as surface tension, capillary or viscosity of liquid. The provisional bonding is achieved with no need for heating, so that a punching die and liners are free from adverse influence from heat. The nozzles can be readily installed in the punching mechanism, specifically in the punching die, so that the operation of supplying the liquid can be performed continuously and smoothly with the punching operation. Water, when used as the liquid for provisional bonding, is advantageous in being of low cost and having less influence on the liners. A small amount of water can be readily removed by heat of the nonprovisional bonding step. Alcohol, when used as the liquid, can be removed quickly by its volatility.

Although the invention has been described above by reference to preferred embodiments of the invention, the invention is not limited to the embodiments described above. Modifications and variations of the embodiment will occur to those skilled in the art in light of the above teachings. The scope of the invention is defined with reference to the following claims.

## Claims

1. A liner bonding process, comprising:
a provisional bonding step of temporarily bonding a shaped liner to an inner side of a cartridge half shell by supplying liquid onto the inner side of the cartridge half shell; and
a nonprovisional bonding step of nontemporarily bonding the liner, temporarily bonded to the inner side of the cartridge half shell by the provisional bonding step, to the inner side of the cartridge half shell.

2. The liner bonding process as claimed in Claim 1, wherein the liquid comprises one of water, alcohol and alcohol diluted with water.

3. The liner bonding process as claimed in Claim 1, wherein the provisional bonding step comprises a dripping sub-step of dripping the liquid onto the inner side of the cartridge half shell and a placing sub-step of placing the liner on the inner side of the cartridge half shell so that the liquid dripped onto the inner side of the cartridge half shell is sandwiched between the liner and the cartridge half shell.

4. The liner bonding process as claimed in Claim 3, wherein the dripping sub-step is performed by dripping the liquid to a plurality of separate positions on the inner side of the cartridge half shell.

5. The liner bonding process as claimed in Claim 1, wherein the liner comprises an adhesive layer, the nonprovisional bonding step is performed by applying heat and pressure to the liner, and the provisional bonding step is performed without applying heat and pressure to the liner on the cartridge half shell.

6. A liner bonding apparatus, comprising:
a provisional bonding mechanism comprising a liquid supplying device for temporarily bonding a shaped liner to an inner side of a cartridge half shell by supplying liquid onto the inner side of the cartridge half shell; and
a nonprovisional bonding mechanism for nontemporarily bonding the liner, bonded temporarily to the inner side of the cartridge half shell by the provisional bonding step, to the inner side of the cartridge half shell.

7. The liner bonding apparatus as claimed in Claim 6, wherein the liner bondinq apparatus further comprises a liner fabric transfer mechanism for transferring a liner fabric, and a liner punching mechanism for forming the shaped liner by punching the liner from the liner fabric.

8. The liner bonding apparatus as claimed in Claim 7, wherein the liquid supplying device comprises a nozzle for dripping a predetermined amount of the liquid onto the inner side of the cartridge half shell.

9. The liner bonding apparatus as claimed in Claim 8, wherein the liner punching mechanism comprises a punching die for punching out the liner from the liner fabric, and the nozzle is provided in the punching die.

10. The liner bonding apparatus as claimed in Claim 9, wherein the liquid supplying device comprises a plurality of nozzles provided in the punching die.

11. The liner bonding apparatus as claimed in Claim 6, wherein the liquid comprises one of water, alcohol and alcohol diluted with water.
